# EUROPÄISCHE PATENTANMELDUNG

(11) **EP 2 719 521 A1**
(43) Veröffentlichungstag der Anmeldung: **16.04.2014**
(21) Anmeldenummer: 13188309.2
(22) Anmeldetag: 11.10.2013
(51) Int. Cl.: B29C 70/86, B29D 99/00, B64C 1/12

(54) **Elastomerzwickel**

(30) Priorität: 12.10.2012 DE 102012109737
(71) Anmelder: Deutsches Zentrum für Luft- und Raumfahrt e.V., 51147 Köln (DE)
(72) Erfinder: Kleineberg, Markus, 30966 Hemmingen (DE); Hühne, Christian, 30173 Hannover (DE); Grote, Matthias, 49809 Lingen (DE); Bold, Jens, 38106 Braunschweig (DE)
(74) Vertreter: Aisch, Sebastian

(57) **Zusammenfassung**

Verfahren zur Herstellung eines Faserverbundbauteils (1), bei dem zwischen den Faserlagen entstehenden Hohlräumen (4) ein Füllkörper (5) aus einem elastomeren Material eingebracht wird. Die Anmeldung offenbart ebenfalls einen Füllkörper aus einem solchen elastomeren Material hierzu.

## Beschreibung

Die Erfindung betrifft ein Verfahren zur Herstellung eines Faserverbundbauteils, das aus einem mit einem Matrixsatz infiltrierten Faserhalbzeug in einem Formwerkzeug hergestellt wird, wobei Faserlagen des Faserhalbzeuges in das Formwerkzeug zur Bildung des herstellenden Faserverbundbauteils eingebracht werden. Die Erfindung betrifft ebenfalls einen Füllkörper zum Ausfüllen von Hohlräumen.

Bei der Herstellung eines Faserverbundbauteils wird in der Regel ein Faserhalbzeug, welches mit einem Matrixharz infiltriert bzw. getränkt ist, durch Beaufschlagung von Druck und/oder Temperatur hergestellt. Dabei befindet sich das Faserhalbzeug meist in einem Formwerkzeug, welches die Negativform des herzustellenden Faserverbundbauteils darstellt und somit dem späteren Faserverbundbauteil die äußere Struktur verleiht. Das Tränken bzw. Infiltrieren des Faserhalbzeuges geschieht dabei entweder vor dem Einbringen des Faserhalbzeuges in das Formwerkzeug (sogenannte prepregs) oder während der Temperatur- und Druckbeaufschlagung. Insbesondere durch die Beaufschlagung mit Temperatur entsteht in dem Matrixharz eine chemische Reaktion, die zu einer vollständigen Vernetzung führt und somit die Fasern des Faserhalbzeuges zu einem integralen Bauteil verbindet.

Ein solches Faserhalbzeug (trocken oder nass) besteht dabei in der Regel aus einer Vielzahl von Faserlagen, die in dem Formwerkzeug entsprechend auf die formgebenden Strukturen drapiert werden.

Ein nicht unerheblicher Nachteil derartiger Faserhalbzeuge bzw. Faserlagen besteht darin, dass die einzelnen Faserlagen aufgrund ihrer mechanischen Eigenschaft nicht über scharfkantige Ecken gefaltet werden können, da dies zu einer Schwächung der Faserstruktur führen würde. So besteht zum Einen die Gefahr, dass die einzelnen Fasern der Faserlage an der Ecke brechen, wenn man versuchen würde, eine solche Faserlage über die scharfkantige Ecke formschlüssig zu drapieren. Dies würde zu einer erheblichen Beeinträchtigung der Steifigkeit des späteren Faserverbundbauteils führen und insbesondere bei sicherheitskritischen Bauelementen zu einem Ausschuss führen.

Aus diesem Grund werden die Faserlagen des Faserhalbzeuges in der Regel über einen hinreichend großen Radius gelegt, wenn in der Form des Faserverbundbauteils eine abgewinkelte Struktur bzw. eine scharfkantige Ecke vorgesehen ist. Aufgrund des vorgesehenen Kantenradius entsteht dabei an der Faserlage keine scharfkantige Ecke, so dass die Gefahr des Brechens der einzelnen Fasern nicht mehr besteht. Darüber hinaus führt das Legen der Faserlagen über einen Kantenradius zur Bildung einer Ecke zu einer verbesserten Kraftverteilung innerhalb des Bauteils bei entsprechender Beanspruchung.

So lässt sich insbesondere bei großflächigen Faserverbundbauteilen die Steifigkeit bzw. Stabilität des Bauteils durch Anordnung von sogenannten Stringern wesentlich erhöhen, so dass großflächige Faserverbundbauteile auch in sicherheitskritischen Bereichen, wie beispielsweise als Flügelschale eines Flugzeuges, eingesetzt werden können. Ein Stringer ist dabei ein längliches Versteifungselement, bei dem die Fasern meist rechtwinklig aus der Ebene der Fasern des flächigen Bauelementes heraus abstehend modelliert sind. Hierdurch lässt sich eine erhöhte Biegesteifigkeit erreichen.

Die Bildung derartiger Stringer erfolgt meist über einen Kantenradius gefaltete Faserlagen, die dann zu einem T-Stringer an einer Seite zusammengeführt werden. Wie bereits oben beschrieben, können die Faserlagen jedoch nicht scharfkantig über die Ecke gefaltet werden, so dass aufgrund des hinreichend großen vorgesehenen Kantenradius (meist R größer 3 mm, vorzugsweise R=7 mm) beim Zusammenführen der abgewinkelten Faserlagen zwangsläufig Hohlräume im Bauteil im Winkelbereich entstehen, die nicht unverfüllt bleiben dürfen. Denn werden derartige in dem Faserhalbzeug gebildete Hohlräume nicht ausgefüllt, so entstehen im späteren Herstellungsprozess erhebliche Faserverschiebungen sowie Einfallstellen, die zu einer erheblichen Stabilitätsbeeinträchtigung führen.

Solche Hohlräume können im Übrigen auch dann entstehen, wenn Faserlagen über Formkerne des Formwerkzeuges drapiert und anschließend zur Bildung des Faserverbundbauteils zusammengesetzt werden, wobei auch hier die Faserlagen nicht scharfkantig über die Ecke gefaltet werden können, sondern einen hinreichend großen Kantenradius benötigen, um nicht zu brechen. Werden die Formkerne mit den darauf abgelegten Faserlagen nun an mindestens einer Seite zusammengeführt, so entsteht im Kantenbereich ein Hohlraum, der dem zwingend vorgesehenen Kantenradius geschuldet ist. Auch hier bedarf es einer entsprechenden Auffüllung.

Um derartige Hohlräume auszufüllen, wird in der Praxis meist ein verdrehtes prepreg verwendet, was in den Hohlraum gelegt und anschließend mit einem Matrixharz ausgefüllt wird. Dadurch entsteht zwar eine Ausfüllung des Hohlraumes, allerdings ist die verwendete Form nicht optimal an den Hohlraum angepasst, was zu einer Stabilitätsbeeinträchtigung führen kann. Eine andere Möglichkeit besteht in der Verwendung von Trockenglasfasergeflechten, deren Verwendung jedoch zu hohen Fertigungs- und Materialkosten führt. Auch lassen sich komplizierte Hohlraumgeometrien nur schlecht abbilden.

Es ist daher Aufgabe der vorliegenden Erfindung, ein verbessertes Verfahren zur Herstellung eines Faserverbundbauteils mit Hohlräumen sowie einen entsprechenden Füllkörper anzugeben, mit dem Hohlräume bei der Herstellung von Faserverbundbauteilen kostengünstig und strukturstabilisierend so ausgeführt werden können, dass die Steifigkeit bzw. Stabilität des späteren Bauteils nicht beeinträchtigt wird. Ein weiterer Aspekt der vorliegenden Erfindung ist es, dass die Hohlräume so ausgefüllt werden, dass das spätere Bauteil insbesondere bei sicherheitskritischen Bereichen die dort herrschenden hohen qualitativen Ansprüche erfüllt.

Die Aufgabe wird erfindungsgemäß mit den kennzeichnenden Merkmalen des Verfahrensanspruchs 1 sowie des nebengeordneten Vorrichtungsanspruchs 7 gelöst.

Demnach wird erfindungsgemäß ein Verfahren der eingangs genannten Art vorgeschlagen, bei dem im Schritt a) mindestens ein Füllkörper bereitgestellt wird, der ein elastomeres Material aufweist. Unter einem elastomeren Material bzw. einem elastomeren Werkstoff wird im Sinne der vorliegenden Erfindung ein Elastomer verstanden, das ein formfester, aber elastisch verformbarer Kunststoff ist, deren Glasübergangspunkt sich unterhalb der Einsatztemperatur befindet. Solche elastomeren Materialien bzw. Werkstoffe sind unter Zug- und Druckbelastung elastisch verformbar, finden aber wieder in ihre ursprüngliche, unverformte Gestalt zurück. Meist sind Elastomere oberhalb der Glasübergangstemperatur elastisch verformbar, während sie unterhalb der Glasübergangstemperatur spröde und fest werden.

Dieser Füllkörper aus einem elastomeren Material wird dann in einen Hohlraum eingebracht, der durch das Einbringen der Faserlagen in dem Formwerkzeug, insbesondere bei über einen Kantenradius gelegten Faserlagen, entstanden ist oder entstehen wird.

Anschließend wird der Faserverbund-Herstellungsprozess mit dem in das Formwerkzeug eingebrachten Faserhalbzeug und dem mindestens einen Füllkörper durchgeführt, wobei in diesem Schritt insbesondere das mit einem Matrixharz getränkte Faserhalbzeug mit Temperatur beaufschlagt wird, um so das Matrixharz in dem Faserhalbzeug auszuhärten. Während dieses Faserverbund-Herstellungsprozesses verbleibt der mindestens eine Füllkörper in dem Faserverbundbauteil und wird später integraler Bestandteil des fertig hergestellten Bauteils.

Selbstverständlich können auch mehrere Füllkörper bereitgestellt werden, die in mehrere Hohlräume des Faserhalbzeuges eingebracht werden.

Mittels eines solchen elastomeren Füllkörpers können nunmehr sehr kostengünstig und effizient die beim Einbringen und Drapieren der Faserlagen in das Formwerkzeug entstehenden Hohlräume ausgefüllt werden, wobei Lasten in den meist versagungskritischen Eckbereichen nicht mehr umgelagert werden, wie dies bei mechanisch hochsteifen und hoch belastbaren Materialien der Fall ist. Darüber hinaus werden wirksam entsprechende Faserondulationen sowie Einfallstellen im Bereich der Hohlräume vermieden. Außerdem lassen sich derartige Füllkörper aus einem elastomeren Material beispielsweise durch Extrusion günstig in der Massenproduktion herstellen, was die Fertigungs- und Materialkosten des gesamten Faserverbund-Herstellungsprozesses signifikant reduziert.

Vorteilhafterweise besteht der gesamte Füllkörper aus dem elastomeren Material.

In einer vorteilhaften Ausführungsform ist das elastomere Material ein thermoplastisches Elastomer, das sich unter Temperaturbeaufschlagung plastisch verformen lässt und sich somit optimal während des Faserverbund-Herstellungspozesses an die Form des Hohlraumes anpassen kann. Dabei können insbesondere entstehende Spannungen, die durch die Harzvernetzungsreaktion in den Faserlagen entstehen können, durch die Verformung des theromplastischen Elastomer aufgefangen werden.

Vorzugsweise handelt es sich bei dem thermoplastischen Elastomer um ein EPDM-Elastomer.

In einer ganz besonders vorteilhaften Ausführungsform ist das elastomere Material des bereitgestellten Füllkörpers ein teilvulkanisiertes Elastomer, das während des Faserverbund-Herstellungsprozesses aufgrund der Temperaturbeauschlagung eine feste Verbindung mit dem umliegenden Faserverbundwerkstoff eingeht, so dass während der Herstellung keine Faserondulationen entstehen und Lasten, die auf das Faserverbundbauteil wirken, nicht in diesen Hohlraumbereich umgelagert werden.

Vorzugsweise ist das teilvulkanisierte Elastomer ein teilvulkanisiertes EPDM-Elastomer.

Hierdurch wird eine gute Füllung und Ausformung des Hohlraumes bei gleichzeitiger Flexibilität zur Anpassung an gekrümmte Strukturen erreicht.

In einer weiteren vorteilhaften Ausführungsform wird der Füllkörper mit einer Form bereitgestellt, die der Form des Hohlraumes, in den der Füllkörper eingebracht werden soll, entspricht. Hierdurch kann von vornherein der Füllkörper an die auszufüllende Hohlraumstruktur angepasst werden, was eine bestmögliche Auffüllung des Hohlraumes nach sich zieht. Sollen mit Hilfe des Füllkörpers insbesondere Hohlräume ausgefüllt werden, die aufgrund von über einem Kantenradius abgewinkelten Faserlagen entstehen, so ist es ganz besonders vorteilhaft, wenn der Füllkörper eine entsprechende Seitenfläche aufweist, welche der Negativform des Kantenradius entspricht. So lassen sich in der Massenproduktion schließlich Füllkörper mit verschiedenen Katenradien herstellen und bereitstellen, die dann je nach Kantenradius der abgewinkelten Faserlagen eingesetzt werden.

So ist es in diesem Zusammenhang ganz besonders vorteilhaft, wenn mindestens zwei über einen vorgegebenen Kantenradius abgewinkelte Faserlagen zusammengeführt und in das Formwerkzeug eingebracht werden, und dieser durch das Zusammenführen der abgewinkelten Faserlagen entstehende Zwickelhohlraum, wie er häufig bei den sogenannten T-Stringern entsteht, mit Hilfe des Füllkörpers ausgefüllt wird, wobei der Füllkörper einen dem Kantenradius der abgewinkelten Faserlagen entsprechenden Kantenradius aufweist.

Unter einem Zwickelhohlraum wird im Sinne der vorliegenden Erfindung im speziellen der Hohlraum verstanden, der beim Zusammenführen zwei über einen Kantenradius abgewinkelter Faserlagen im Kantenbereich entsteht. Ein in diesem Zwickelhohlraum eingebrachter Füllkörper wird daher in der Regel auch Zwickel (oder im Englischen als "gusset") bezeichnet. Dabei weist der Füllkörper bzw. Zwickel für jede abgewinkelte Kante einer Faserlage eine entsprechende Seitenfläche auf, die einen Kantenradius hat, der dem Kantenradius der abgewinkelten Faserlage entspricht.

Die Aufgabe wird im Übrigen auch erfindungsgemäß gelöst mit einem Zwickelfüllkörper zum Ausfüllen eines Zwickelhohlraumes, der durch Zusammenführen mindestens zweier über einen vorgegebenen Kantenradius abgewinkelter Faserlagen gebildet wird, wobei erfindungsgemäß der Zwickelfüllkörper ein elastomeres Material aufweist.

Vorteilhafte Ausgestaltungen des Zwickelfüllkörpers finden sich in den entsprechenden Unteransprüchen.

So ist der Zwickelfüllköper in einer vorteilhaften Ausführungsform ein prismatischer Körper mit einer vieleckigen Grundfläche, insbesondre einer dreieckigen Grundfläche, wobei mindestens eine Seite der Grundfläche einen nach innen gewölbten Kreisbogen mit einem vorgegebenen Kantenradius aufweist.

Im Ausführungsbeispiel der T-Stringer, die aus zwei zusammengefügten und über einen Kantenradius abgewinkelten Faserlagen hergestellt werden, weist der Zwickelfüllkörper als prismatischer Körper eine dreieckige Grundfläche auf, bei der zwei Seiten der Grundfläche einen nach innen gewölbten Kreisbogen darstellen. Der Radius des Kreisbogens entspricht dabei dem Kantenradius der abgewinkelten Faserlagen, was nicht nur für das Ausführungsbeispiel der T-Stringer und der dreieckigen Grundfläche gilt.

Die Erfindung wird anhand der beigefügten Figuren beispielhaft näher erläutert. Es zeigen:
- Fig. 1:: schematische Darstellung eines Faserverbundbauteils mit einem Füllkörper;
- Fig. 2:: schematische Darstellung eines Herstellungsbeispiels für einen sogenannten T-Stringer.

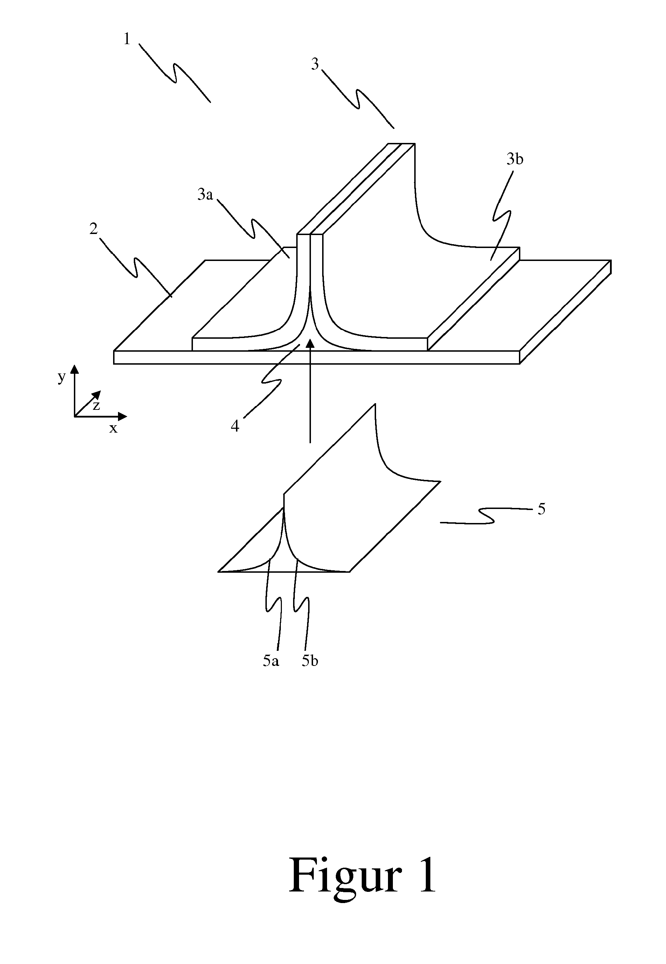

Fig. 1 zeigt schematisch ein herzustellendes Faserverbundbauteil 1, das ein flächiges Grundelement 2 aus einem Faserverbundwerkstoff hat. Die Fasern des flächigen Grundelementes 2 erstrecken sich dabei in der Ebene x bzw. z. Zur Stabilität bzw. zur Erhöhung der Steifigkeit des Flächengrundelementes 2 in eine Richtung außerhalb der Faserebene xz (beispielsweise in y-Richtung) wird ein Versteifungselement 3 auf dem flächigen Grundelement 2 angeordnet, das auch als Stringer bezeichnet wird. Das Versteifungselement 3 weist auf beiden Seiten jeweils mindestens eine Faserlage 3a, 3b auf, die etwa mittig in einem rechten Winkel abgewinkelt sind.

Aufgrund der Tatsache, dass derartige Faserlagen 3a, 3b nicht über scharfkantige Ecken gefaltet werden können, wird in dem Eckenbereich ein hinreichend großer Kantenradius vorgesehen, über den die Faserlagen 3a, 3b abgewinkelt sind. Dadurch entsteht im Eckbereich keine scharfkantige Ecke, sondern eine abgerundete Ecke.

Werden nun die beiden über einen Kantenradius abgewinkelten Faserlagen 3a, 3b an einer der beiden Seiten zusammengeführt, so ergibt sich das Versteifungselement 3. Wird das so gebildete Versteifungselement 3 auf dem flächigen Grundelement 2 drapiert, so entsteht im Eckbereich, in dem die beiden Faserlagen 3a, 3b jeweils über einen Kantenradius abgewinkelt wurden, ein Hohlraum 4, der ausgefüllt werden muss, da es in dem flächigen Grundelement 2 ansonsten im Bereich des Hohlraumes 4 zu Einfallstellen oder Faserondulationen kommt.

Erfindungsgemäß wird nun vorgeschlagen, dass ein Füllkörper 5, im Ausführungsbeispiel der Fig. 1 im Speziellen als Zwickel bezeichnet, bereitgestellt wird, der ein elastomeres Material aufweist. Der Zwickel 5 ist dabei so ausgebildet, dass er einen prismatischen Körper hat, der eine dreieckige Grundfläche aufweist. Zwei der drei Seiten der eckigen Grundfläche, mit 5a und 5b bezeichnet, sind als Kreisbogen ausgebildet, wobei der Radius des Kreisbogens 5a und 5b jeweils dem Kantenradius der abgewinkelten Faserlagen des Stringers 3a und 3b entspricht.

Dadurch wird es möglich, dass der ein elastomeres Material aufweisende Füllkörper 5 in den Hohlraum 4 (im Ausführungsbeispiel der Fig. 1 auch als Zwickelbereich bzw. Zwickelhohlraum bezeichnet) eingebracht werden kann, um so den Hohlraum 4 vollständig auszufüllen.

Anschließend wird das Faserverbundbauteil 1 mit dem flächigen Grundelement 2, dem Versteifungselement 3 sowie dem Füllkörper 5 in einen nicht dargestellten Ofen eingefahren, um das Matrixharz mit dem das aus Faserlagen gebildete flächige Grundelement 2 und das Verstärkungselement 3 infiltriert wurde, auszuhärten. Der Füllkörper 5 wird dann integraler Bestandteil des herzustellenden Faserverbundbauteils 1.

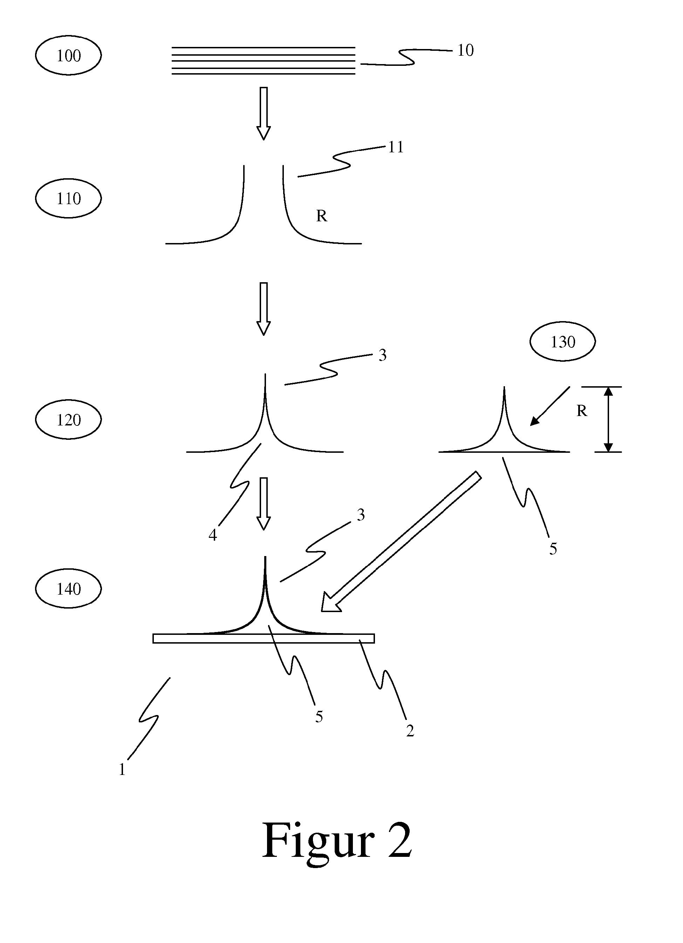

Fig. 2 zeigt schematisch den Verfahrensablauf zur Herstellung eines Faserverbundbauteils mit einem Versteifungselement. Im Verfahrensschritt 100 werden zunächst entsprechende Faserlagen 10 zur Herstellung der Preform-Stringer zugeschnitten. Diese zugeschnittenen Faserlagen 10 können dabei trocken oder bereits mit einem Matrixharz vorgetränkt sein.

Im Verfahrensschritt 110 werden die zugeschnittenen Faserlagen 10 um einen Kantenradius r abgewinkelt, so dass jeweils im Wesentlichen rechtwinklig abgewinkelte Preformen 11 entstehen.

In Schritt 120 werden dann die über einen Kantenradius r abgewinkelten Preformen 11 mit einer Seite jeweils zusammengeführt, so dass sich das Versteifungselement 3 bilden lässt. Vorher, währenddessen oder danach wird in einem Schritt 130 der Elastomerzwickel 5 hergestellt, der an zwei Seiten jeweils nach innen gewölbte Kreisbogen aufweist, die jeweils einen Radius r haben, der dem Kantenradius r der abgewinkelten Preform 11 entspricht. Dadurch passt der Elastomerzwickel 5 exakt in den durch das Zusammenführen der Preformen 11 entstandenen Hohlraumes 4.

Im Schritt 140 wird nun das Versteifungselement 3 mit dem Elastomerzwickel 5 zusammengeführt und auf dem flächigen Grundelement 2 des herzustellenden Faserverbundbauteils 1 platziert. Das flächige Grundelement 2, welches ebenfalls aus einer Mehrzahl von Faserlagen bestehen kann, ist in einem Formwerkzeug eingebracht, wobei das Versteifungselement 3 während der Herstellung ebenfalls mit Formkernen besetzt sein kann, um die Stabilität während des Herstellungsprozesses zu gewährleisten.

So lässt sich ein Faserverbundbauteil 1 herstellen, bei dem in einem Hohlraum 4 ein Füllkörper 5 aus einem elastomeren Material vorgesehen ist, der integraler Bestandteil des Faserverbundbauteils wird. Dies hat beispielsweise den entscheidenden Vorteil, dass in den durch den Zwickel 5 besetzten Zwickelbereich bzw. Zwickelhohlraum keine Lasten eingezogen bzw. umgelagert werden, da der Zwickel 5 aus einem elastomeren Material an dieser Stelle nachgibt. Da jedoch gerade dieser Zwickelbereich besonders anfällig ist, ist das fehlende Umlagern von Lasten im Zwickelbereich wünschenswert.

Wird ein teilvulkanisiertes elastomeres Material als Zwickel 5 verwendet, beispielsweise ein teilvulkanisiertes EPDM-Elastomer, so entsteht eine besonders feste und stabile Verbindung zwischen den an den Zwickel 5 angrenzenden Fasermaterialien, was eine besonders flexible Struktur bildet.

### Bezugszeichenliste

- 1: Faserverbundbauteil
- 2: flächiges Grundelement
- 3: Versteifungselement bzw. Stringer
- 3a: erste Faserlage des Stringers
- 3b: zweite Faserlage des Stringers
- 4: Hohlraum
- 5: Füllkörper
- 5a: erste Seite des Füllkörpers
- 5b: zweite Seite des Füllkörpers
- 10: Faserzuschnitte
- 11: abgewinkelte Preform
- R: Kantenradius

## Patentansprüche

1. Verfahren zur Herstellung eines Faserverbundbauteils (1), das aus einem mit einem Matrixharz infiltrierten Faserhalbzeug (2, 3, 10) in einem Formwerkzeug hergestellt wird, wobei Faserlagen des Faserhalbzeuges in das Formwerkzeug zur Bildung des herzustellenden Faserverbundbauteils (1) eingebracht werden, **gekennzeichnet durch**
a) Bereitstellen mindestens eines Füllkörpers (5), der ein elastomeres Material aufweist,
b) Einbringung des mindestens einen Füllkörpers (5) in einen beim Einbringen der Faserlagen (3a, 3b) in das Formwerkzeug entstandenen Hohlraum (4), und
c) Durchführen des Faserverbund-Herstellungsprozesses mit dem in das Formwerkzeug eingebrachten Faserhalbzeug und dem mindestens einen Füllkörper (5).

2. Verfahren nach Anspruch 1, **dadurch gekennzeichnet, dass** der Füllkörper (5) aus dem elastomeren Material besteht.

3. Verfahren nach Anspruch 1 oder 2, **dadurch gekennzeichnet, dass** das elastomere Material ein thermoplastisches Elastomer, vorzugsweise ein EPDM-Elastomer, ist.

4. Verfahren nach einem der vorhergehenden Ansprüche, **dadurch gekennzeichnet, dass** das elastomere Material des bereitgestellten Füllkörpers (5) ein teilvulkanisiertes Elastomer, vorzugsweise ein teilvulkanisiertes EPDM-Elastomer, ist.

5. Verfahren nach einem der vorhergehenden Ansprüche, **dadurch gekennzeichnet, dass** der Füllkörper (5) mit einer Form bereitgestellt wird, die der Form des Hohlraumes (4), in den der Hohlkörper (5) eingebracht werden soll, entspricht.

6. Verfahren nach einem der vorhergehenden Ansprüche, **dadurch gekennzeichnet, dass** mindestens zwei über einen vorgegebenen Kantenradius (R) abgewinkelte Faserlagen (3a, 3b) zusammengeführt und in das Formwerkzeug eingebracht werden, und dass in den durch den vorgegebenen Kantenradius (R) entstandenen Zwickelhohlraum (4) der Füllkörper (5) eingebracht wird.

7. Zwickelfüllkörper (5) zum Ausfüllen eines Zwickelhohlraumes (4), der durch Zusammenführen mindestens zweier über einen vorgegebenen Kantenradius (R) abgewinkelter Faserlagen (3a, 3b) gebildet wird, **dadurch gekennzeichnet, dass** der Zwickelfüllkörper (5) ein elastomeres Material aufweist.

8. Zwickelfüllkörper (5) nach Anspruch 7, **dadurch gekennzeichnet, dass** der Zwickelfüllkörper (5) aus dem elastomeren Material besteht.

9. Zwickelfüllkörper (5) nach Anspruch 7 oder 8, **dadurch gekennzeichnet, dass** das elastomere Material ein thermoplastisches Elastomer, vorzugsweise ein EPDM-Elastomer, ist.

10. Zwickelfüllkörper (5) nach einem der Ansprüche 7 bis 9, **dadurch gekennzeichnet, dass** das elastomere Material des Füllkörpers (5) ein teilvulkanisiertes Elastomer, vorzugsweise ein teilvulkanisiertes EPDM-Elastomer, ist.

11. Zwickelfüllkörper (5) nach einem der Ansprüche 7 bis 10, **dadurch gekennzeichnet, dass** der Zwickelfüllkörper (5) ein prismatischer Körper mit einer vieleckigen Grundfläche ist, wobei mindestens eine Seite der Grundfläche einen nach innen gewölbten Kreisbogen mit einem vorgegebenen Radius (R) aufweist.
